# EUROPÄISCHE PATENTANMELDUNG

(11) **EP 3 335 554 A1**
(43) Veröffentlichungstag der Anmeldung: **20.06.2018**
(21) Anmeldenummer: 17401122.1
(22) Anmeldetag: 07.12.2017
(51) Int. Cl.: A01M 7/00

(54) **FELDSPRITZE**

(30) Priorität: 13.12.2016 DE 102016124119
(71) Anmelder: Amazonen-Werke H. Dreyer GmbH & Co. KG, 49205 Hasbergen (DE)
(72) Erfinder: Heer, Jochen, 49074 Osnabrück (DE); Kühn, Christoph, 49080 Osnabrück (DE); Große Brinkhaus, Andre, 48149 Münster (DE)

(57) **Zusammenfassung**

Beschrieben wird eine Feldspritze mit an einem Verteilergestänge in Abständen zueinander angeordneten Verteilerdüsen, denen Beleuchtungseinheiten zur Beleuchtung eines von den Verteilerdüsen jeweils ausgestoßenen Flüssigkeitsfächers zugeordnet sind. Dadurch, dass eine spektrale, zeitliche und/oder direktionale Abstrahlcharakteristik der Beleuchtungseinheiten zur Anzeige von Betriebs- und/oder Fehlerzuständen zugeschalteter Verteilerdüsen gesteuert verändert werden kann, lassen sich diese Zustände auf technisch einfache Weise, zuverlässig und energieeffizient einem Fahrer der Feldspritze auch bei Dunkelheit anzeigen.

## Beschreibung

Die Erfindung betrifft eine Feldspritze gemäß Oberbegriff des Anspruchs 1 und wie bekannt aus der EP 1 961 300 B1.

Gattungsgemäße Feldspritzen werden in der Landwirtschaft zum Ausbringen von Pflanzenschutzmitteln eingesetzt und erlauben durch Beleuchtung der ausgestoßenen Flüssigkeitsfächer eine einfache, zuverlässige und energieeffiziente Kontrolle der Ausbringarbeit auch bei Dunkelheit. Beispielsweise lässt sich erkennen, ob Flüssigkeit von den Verteilerdüsen abgegeben wird, und ob an den freien Enden des Verteilergestänges Hindernisse vorhanden sind. Für die Beleuchtung der ausgestoßenen Flüssigkeitsfächer können Leuchtdioden (LED) verwendet werden, die mittels im Verteilergestänge verlaufender Leitungen mit Spannung versorgt und mittels eines CAN-Busses oder dergleichen gesteuert werden können.

Dennoch wäre eine verbesserte Kontrolle der Feldspritze hinsichtlich des Betriebszustands und/oder der korrekten Funktion einzelner Verteilerdüsen wünschenswert. Insbesondere dahingehend, ob geeignete Düsenkörper an den Verteilerdüsen verwendet werden. Beispielsweise sollten Düsenkörper mit vergleichsweise kleinem Öffnungswinkel des erzeugten Flüssigkeitsfächers selektiv im Randbereich eines Feldes und/oder des Verteilergestänges für ein Abdrift minderndes Spritzen eingesetzt werden.

Die gestellte Aufgabe wird mit einer Feldspritze gemäß Anspruch 1 gelöst. Demnach umfasst diese an einem Verteilergestänge in Abständen zueinander angeordnete Verteilerdüsen, denen Beleuchtungseinheiten zur Beleuchtung eines von den Verteilerdüsen jeweils ausgestoßenen Flüssigkeitsfächers zugeordnet sind. Erfindungsgemäß weisen die Beleuchtungseinheiten eine hinsichtlich spektraler, zeitlicher und/oder direktionaler Abstrahlcharakteristik in Abhängigkeit von Betriebs- und/oder Fehlerzuständen der Verteilerdüsen umschaltbare Lichtabstrahlung auf.

Somit kann wenigstens eine bestimmte Abstrahlcharakteristik der Beleuchtungseinheiten zur selektiven Anzeige unterschiedlicher ordnungsgemäßer Betriebszustände und/oder bestimmter Fehlerzustände der jeweils aktivierten Verteilerdüsen gezielt verändert werden.

Unter einer Zuordnung der Beleuchtungseinheiten zu den Verteilerdüsen ist eine Anordnung zu verstehen, bei der zumindest obere, nicht miteinander überlappende Bereiche der Flüssigkeitsfächer separat, also von der Beleuchtung benachbarter Flüssigkeitsfächer unterscheidbar, beleuchtet werden können.

Ein Fehlerzustand ist beispielsweise ein unzureichender oder fehlender Flüssigkeitsfächer aufgrund einer Verschmutzung oder eines Defekts im Bereich der Verteilerdüse.

Ein ordnungsgemäßer Betriebszustand ist beispielsweise der Flüssigkeitsausstoß mittels eines bestimmten an der Verteilerdüse vorhandenen Düsenkörpers, der maßgeblich für die Charakteristik des erzeugten Flüssigkeitsfächers ist.

Die spektrale, zeitliche und/oder direktionale Abstrahlcharakteristik lässt sich beispielsweise mittels zentraler Steuerung an der Feldspritze umschalten und/oder mittels dezentraler Steuerungen im Bereich der Verteilerdüsen, gegebenenfalls auch durch manuelles Verstellen der Verteilerdüsen, insbesondere zur Verwendung eines bestimmten Düsenkörpers.

Unterschiedliche spektrale Abstrahlcharakteristiken im Sinne der vorliegenden Erfindung sind als unterschiedliche Farbtöne und/oder als Weißlicht mit bestimmter Farbtemperatur vom menschlichen Auge wahrnehmbar. Die spektralen Abstrahlcharakteristiken sind durch entsprechende Bereiche des sichtbaren Lichtspektrums und/oder entsprechende spektrale Intensitätsverteilungen innerhalb solcher Bereiche definiert. Unterschiedliche Farbtöne und/oder Weißlicht lassen sich mit einzelnen Lichtquellen unterschiedlicher spektraler Abstrahlung erzeugen und/oder durch variable additive Farbmischung in einer Lichtquelle.

Unterschiedliche zeitliche Abstrahlcharakteristiken sind vom menschlichen Auge als solches empfundenes Dauerlicht und Blinklichter. Die Blinklichter können unterschiedliche Blinkmuster mit unterschiedlich langen Hellzeiten und Dunkelzeiten aufweisen, gegebenenfalls auch mit geeignet anschwellenden und/oder abschwellenden Hellphasen und Dunkelphasen.

Unterschiedliche direktionale Abstrahlcharakteristiken sind zum einen die herkömmliche Hauptabstrahlrichtung zur Beleuchtung nach unten und zum anderen eine zusätzliche oder alternative Abstrahlung nach oben und/oder zur Seite mittels Lichtumlenkung und/oder zusätzliche Lichtquellen.

Insbesondere Farbtöne und Blinklichter ermöglichen eine flexible Codierung unterschiedlicher Betriebszustände und/oder Fehlerzustände der Verteilerdüsen im Arbeitsbetrieb.

Geeignete Beleuchtungseinheiten umfassen beispielsweise jeweils wenigstens eine mehrfarbige LED, mit der sich mehrere spektrale und/oder zeitliche Abstrahlcharakteristiken für Betriebszustände und Fehlerzustände erzeugen lassen. Geeignete Beleuchtungseinheiten können alternativ oder ergänzend wenigstens eine einfarbige LED für einzelne spektrale und/oder zeitliche Beleuchtungsvarianten umfassen. Entscheidend ist, dass die Beleuchtungseinheiten Lichtquellen umfassen, deren Abstrahlcharakteristik für einzelne aktive Verteilerdüsen geändert werden kann, um deren aktuellen Betriebszustand und/oder Fehlerzustand selektiv anzuzeigen.

Vorzugsweise können die Beleuchtungseinheiten zwischen wenigstens zwei unterschiedlichen Farbtönen umgeschaltet werden. Die Farbtöne unterscheiden sich dann vorzugsweise um wenigstens 45°, insbesondere um wenigstens 60°, im HSV- oder HSI-Farbraum oder dergleichen voneinander.

Die unterschiedlichen Farbtöne eignen sich insbesondere zur Kennzeichnung unterschiedlicher ordnungsgemäßer Betriebszustände. Besonders geeignet sind beispielsweise blaue, grüne und/oder gelbe Farbtöne, ebenso Weißlicht. Rote Farbtöne eignen sich besonders zur Kennzeichnung von Fehlerzuständen.

Vorzugsweise können die Beleuchtungseinheiten zwischen Dauerlicht und Blinklicht umgeschaltet werden. Beispielsweise kann die Beleuchtung bei Erkennung eines Fehlerzustands von Dauerlicht auf Blinklicht wechseln und umgekehrt. Blinklicht eignet sich zur besonders zuverlässigen Kennzeichnung von Fehlerzuständen beispielsweise auch für farbenblinde Personen. Die relativen Hellzeiten nehmen vorzugsweise 10-90% ein. Die Länge der Hell- und/oder Dunkelzeiten kann beispielsweise 0,2 bis 2 s betragen. Fließende Übergänge zwischen Hellphasen und Dunkelphasen sind prinzipiell möglich und beispielsweise bei 50% Helligkeit definiert.

Besonders vorteilhaft ist eine Kennzeichnung von Fehlerzuständen durch einen Wechsel von Dauerlicht zu Blinklicht und einen Wechsel zwischen Farbtönen oder von Weißlicht zu einem anderen Farbton.

Vorzugsweise kann eine Hauptabstrahlrichtung der Beleuchtungseinheiten umgeschaltet werden. Beispielsweise könnte die Hauptabstrahlrichtung in ordnungsgemäßem Betriebszustand nach unten weisen und bei einem Fehlerzustand nach oben oder zur Seite. Dies könnte durch ablenkende optische Elemente, wie beispielsweise Spiegel, erzielt werden oder durch gezielte Aktivierung entsprechend ausgerichteter Lichtquellen.

Vorzugsweise umfasst die Feldspritze ferner eine Steuerung für die Beleuchtungseinheiten zum synchronisierten Abstrahlen eines Blinklichts oder Lauflichts für eine Gruppe von Verteilerdüsen. Damit lassen sich Betriebszustände oder Fehlerzustände für mehrere Verteilerdüsen gemeinsam kennzeichnen, beispielsweise zur vorübergehenden Kennzeichnung von Verteilerdüsen bei deren Aktivierung und/oder Deaktivierung im Rahmen einer Teilbreitenschaltung.

Mit den voranstehend beschriebenen Ausführungsformen lassen sich unterschiedliche Betriebszustände und/oder Fehlerzustände durch gezielte Steuerung der Beleuchtungseinheiten sowohl flexibel als auch zuverlässig und ökonomisch anzeigen.

Vorzugsweise umfassen die Beleuchtungseinheiten jeweils wenigstens zwei getrennt zuschaltbare einfarbige LED und/oder wenigstens eine mehrfarbige LED, also eine LED mit einstellbarer Farbmischung. LED lassen sich besonders einfach und flexibel elektrisch ansteuern.

Vorzugsweise umfasst die Feldspritze ferner Überwachungseinheiten zum Überwachen der Flüssigkeitsfächer, insbesondere zur optischen Überwachung der beleuchteten Flüssigkeitsfächer, hinsichtlich des Auftretens wenigstens eines Fehlerzustands. Die Überwachungseinheiten detektieren beispielsweise an den Flüssigkeitsfächern abgelenkte Anteile der Lichtstrahlen. Wird eine unzulässige Abweichung des detektierten Lichts von einer Sollvorgabe festgestellt, wechselt die Beleuchtung an der betroffenen Verteilerdüse zu einer Abstrahlcharakteristik, die den festgestellten Fehlerzustand kennzeichnet. Nach Beseitigung des Fehlerzustands kann die Überwachungseinheit zurückgesetzt und die Beleuchtungseinheit wieder zur Anzeige des ordnungsgemäßen Betriebszustands angewiesen werden.

Vorzugsweise umfasst die Feldspritze ferner wenigstens eine Steuerung zum Umschalten der Abstrahlcharakteristik selektiv für Verteilerdüsen im Fehlerzustand. Dies ermöglicht eine direkte und einfache Lokalisierung von Betriebszuständen und/oder Fehlerzuständen für alle an dem Verteilergestänge vorhandene Verteilerdüsen.

Vorzugsweise umfassen die Verteilerdüsen jeweils wenigstens zwei alternativ aktivierbare Düsenkörper zum Ausstoßen unterschiedlicher Flüssigkeitsfächer, wobei jedem Düsenkörper ein eigener Farbton zur Beleuchtung des erzeugten Flüssigkeitsfächers zugeordnet ist. Dies ermöglicht eine einfache visuelle Kennzeichnung des aktivierten Düsenkörpers für einzelne Verteilerdüsen. Beispielsweise kann kontrolliert werden, ob im Randbereich des Verteilergestänges ein Düsenkörper für eine Abdrift mindernde Ausbringung des Spritzmittels gewählt wurde. An den anderen Verteilerdüsen könnten dagegen für das Feldinnere besonders geeignete Düsenkörper aktiviert sein und durch Beleuchtung der Flüssigkeitsfächer entsprechend farblich codiert werden. Auch Blinklichter wären zur Codierung bestimmter Düsenkörper prinzipiell möglich.

Vorzugsweise umfassen die Beleuchtungseinheiten im Bereich der Düsenkörper angeordnete und einzeln zuschaltbare einfarbige LED. Bei einem Wechsel der Düsenkörper wird automatisch die jeweils zugeordnete LED aktiviert und der mit dem aktiven Düsenkörper erzeugte Flüssigkeitsfächer beleuchtet. Einfarbige LED sind besonders energieeffizient.

Vorzugsweise umfassen die Beleuchtungseinheiten jeweils mehreren Düsenkörpern der Verteilerdüse gemeinsam zugeordnete mehrfarbige LED. Mehrfarbige LED lassen sich farblich durchstimmen und sind daher besonders flexibel einsetzbar.

Vorzugsweise sind die Düsenkörper gemeinsam an verstellbaren Haltern, insbesondere Revolvern, mit Positionsgebern zum Feststellen des jeweils aktivierten Düsenkörpers und/oder mit Stufenschaltern zum Umschalten des zugehörigen Farbtons befestigt. Beispielsweise können die zu aktivierenden Düsenkörper dann manuell in eine nach unten weisende Position gedreht werden. Die Auswahl des aktivierten Düsenkörpers lässt sich visuell anhand des demzufolge abgestrahlten Farbtons kontrollieren, gegebenenfalls auch vor Beginn der Ausbringarbeiten.

Vorzugsweise sind an der Feldspritze ferner Stellmotoren zur Aktivierung der Düsenkörper und eine Steuerung zum automatischen Zuschalten des zugeordneten Farbtons ausgebildet. Dies ermöglicht eine zentrale Auswahl bestimmter Düsenkörper und deren visuelle Kontrolle beispielsweise vom Fahrersitz aus.

Eine bevorzugte Ausführungsform der Erfindung ist in den Zeichnungen dargestellt. Es zeigen:
- Fig. 1: eine rückwärtige Ansicht der Feldspritze mit ausgeklapptem Verteilergestänge;
- Fig. 2: einen Teilbereich des Verteilergestänges mit ordnungsgemäß arbeitenden Verteilerdüsen;
- Fig. 3: das Verteilergestänge der Fig. 2 mit einer fehlerhaften Verteilerdüse;
- Fig. 4: den Randbereich des Verteilergestänges mit einer bezüglich des ausgestoßenen Flüssigkeitsfächers abweichenden äußeren Verteilerdüse;
- Fig. 5: eine Verteilerdüse mit drei Düsenkörpern und unterschiedlich beleuchtete Flüssigkeitsfächer; und
- Fig. 6: einen Fehlerzustand einer Verteilerdüse mit Blinklicht-Kennzeichnung.

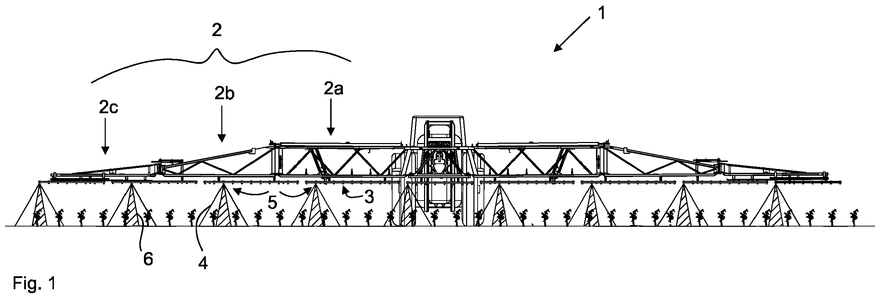

Wie die Fig. 1 erkennen lässt, umfasst die Feldspritze 1 bekanntermaßen ein sich quer zur Fahrtrichtung erstreckendes Verteilergestänge 2 mit Segmenten 2a, 2b und 2c, an denen eine Vielzahl von Verteilerdüsen 3 zum Ausstoßen von Flüssigkeitsfächern 4 eines Spritzmittels vorzugsweise im regelmäßigen Abstand zueinander angeordnet sind. Den Verteilerdüsen 3 zugeordnet sind Beleuchtungseinheiten 5 mit einer Lichtabstrahlung 6 zur Beleuchtung der Flüssigkeitsfächer 4. Der Übersichtlichkeit halber sind die Lichtabstrahlung 6 und Flüssigkeitsfächer 4 in der Fig. 1 nur für jede zehnte Verteilerdüse 3 dargestellt.

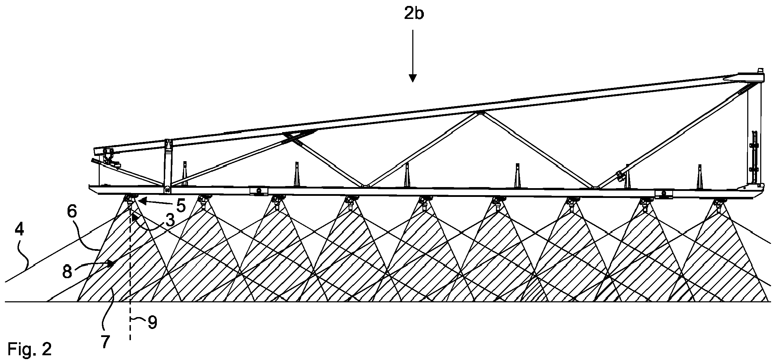

Die Fig. 2 verdeutlicht das mittlere Segment 2b des Verteilergestänges 2 mit den daran befestigten Verteilerdüsen 3 im normalen Arbeitsbetrieb. Demnach werden alle gezeigten Verteilerdüsen 3 so betrieben, dass sie identisch ausgelegte Flüssigkeitsfächer 4 abgeben.

Ferner werden alle Beleuchtungseinheiten 5 zur Kennzeichnung eines bestimmten Betriebszustands der Verteilerdüsen 3 mit identisch ausgelegter Lichtabstrahlung 6 betrieben, also mit identischer spektraler Abstrahlcharakteristik 7, identischer zeitlicher Abstrahlcharakteristik 8 und identischer direktionaler Abstrahlcharakteristik 9.

Unter der spektralen Abstrahlcharakteristik 7 ist zu verstehen, dass die Lichtabstrahlung 6 einen bestimmten Farbton aufweist, beispielsweise einen blauen, grünen, gelben oder roten Farbton, der einen bestimmten Betriebszustand der Verteilerdüsen 3 kennzeichnet. Unterschiedliche Farbtöne sind durch unterschiedliche Schraffierungsmuster dargestellt. Bezogen auf die Funktion der Lichtabstrahlung 6 kann auch Weißlicht als ein separater Farbton verstanden werden.

Unter der zeitlichen Abstrahlcharakteristik 8 ist zu verstehen, dass die Beleuchtungseinheiten 5 entweder vom menschlichen Auge als solches wahrgenommenes Dauerlicht abstrahlen oder Blinklicht mit einem vom menschlichen Auge als solchen erkennbaren Blinkmuster. Im Beispiel der Fig. 2 geben sämtliche Beleuchtungseinheiten 5 Dauerlicht ab. Dies ist in Form vollflächiger Schraffierungen der Lichtabstrahlung 6 dargestellt.

Unter der direktionalen Abstrahlcharakteristik 9 ist insbesondere eine Hauptabstrahlrichtung der Beleuchtungseinheiten 5 zu verstehen, die im Beispiel der Fig. 2 nach unten auf den Flüssigkeitsfächer 4 gerichtet ist. Hierbei kann die Hauptabstrahlrichtung der Beleuchtungseinheiten 5 im Wesentlichen parallel zur Hauptausstoßrichtungen der Verteilerdüsen 3 sein oder diese schneiden.

Der Erfindung liegt der Gedanke zu Grunde, dass wenigstens eine der Abstrahlcharakteristiken 7, 8, 9 für aktivierte Verteilerdüsen 3 manuell oder automatisch eingestellt und/oder gezielt verändert werden kann, um bestimmte Betriebszustände und/oder Fehlerzustände der Verteilerdüsen 3 anzuzeigen.

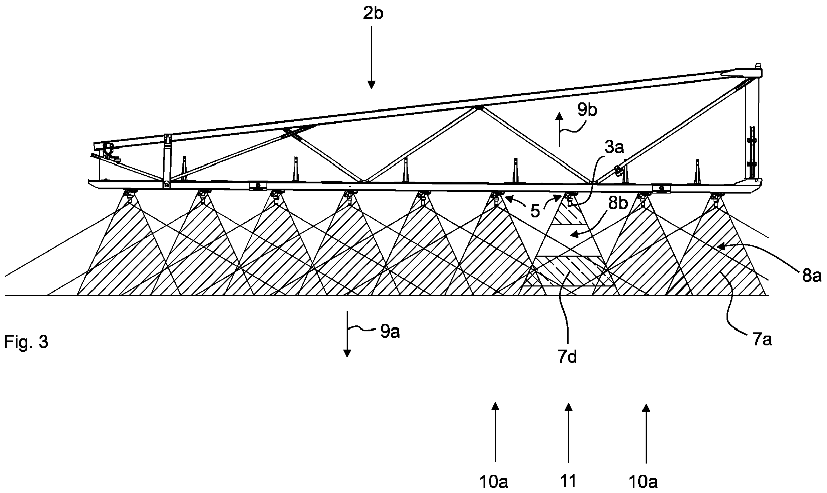

Wie die Figuren 3 bis 6 verdeutlichen, können hierzu beispielsweise erste bis vierte Farbtöne 7a-7d sowie Dauerlicht 8a und Blinklicht 8b verwendet werden. Auch eine normalerweise verwendete Hauptabstrahlrichtung 9a nach unten könnte gezielt verändert werden, beispielsweise in eine vorübergehend wirksame Hauptabstrahlrichtung 9b nach oben.

Für den Wechsel der Abstrahlcharakteristik 7, 8, 9 umfassen die Beleuchtungseinheiten 5 vorzugsweise jeweils mehrere einzeln schaltbare Lichtquellen, beispielsweise in Form einfarbiger LED, und/oder wenigstens eine Lichtquelle mit einstellbarer additiver Farbmischung, insbesondere in Form einer mehrfarbigen LED.

Die Fig. 3 zeigt beispielhaft das mittlere Segment 2b des Verteilergestänges 2 mit ordnungsgemäß in einem ersten Betriebszustand 10a arbeitenden Verteilerdüsen 3 und eine fehlerhaft arbeitende Verteilerdüse 3a in einem Fehlerzustand 11. Dieser besteht beispielsweise darin, dass die Verteilerdüse 3a keinen oder einen ungenügenden Flüssigkeitsfächer 4 ausstößt.

Zur Kennzeichnung des Fehlerzustands 11 wird die zugeordnete Beleuchtungseinheit 5 vorzugsweise derart angesteuert, dass sich ihre spektrale Abstrahlcharakteristik 7 und/oder ihre zeitliche Abstrahlcharakteristik 8 gezielt ändert.

Im gezeigten Beispiel weist die Lichtabstrahlung 6 im ersten Betriebszustand 10a einen ersten Farbton 7a und im Fehlerzustand 11 einen vierten Farbton 7d auf. Dies ist in der Fig. 3 durch unterschiedliche Schraffierungsmuster gekennzeichnet.

Ferner erfolgt die Lichtabstrahlung 6 im ersten Betriebszustand als Dauerlicht 8a und im Fehlerzustand 11 als Blinklicht 8b mit einem charakteristischen Blinkmuster. Dies ist durch eine nur abschnittsweise Schraffierung der dargestellten Lichtabstrahlung 6 gekennzeichnet.

Es wäre jedoch ebenso denkbar, lediglich die spektrale Abstrahlcharakteristik 7 zur Kennzeichnung des Fehlerzustands 11 zu ändern oder lediglich die zeitliche Abstrahlcharakteristik 8. Auch eine Änderung der direktionalen Abstrahlcharakteristik 9 wäre möglich, beispielsweise durch einen Wechsel zur vorübergehenden Hauptabstrahlrichtung 9b.

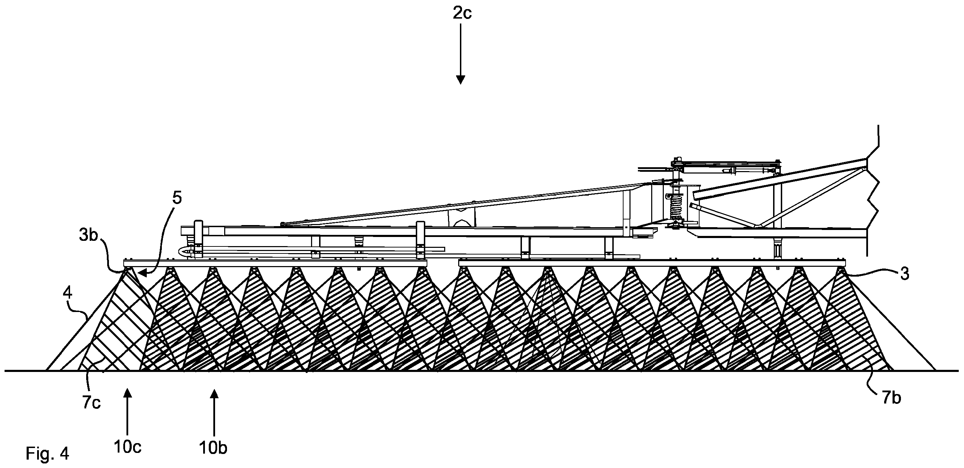

Die Fig. 4 verdeutlicht für das äußere Segment 2c des Verteilergestänges 2, dass sich die Verteilerdüsen 3 auch gleichzeitig in unterschiedlichen ordnungsgemäßen Betriebszuständen befinden können, nämlich beispielsweise in einem zweiten Betriebszustand 10b und in einem dritten Betriebszustand 10c.

Wie die Figuren 3 und 4 im Vergleich zeigen, haben die Flüssigkeitsfächer 4 im ersten Betriebszustand 10a beispielsweise den größten Öffnungswinkel, im zweiten Betriebszustand 10b einen mittleren und im dritten Betriebszustand 10c einen nach außen hin kleineren Öffnungswinkel. Bestimmte ordnungsgemäße Betriebszustände könnten auch auf andere Weise definiert sein, beispielsweise durch Teilbreitenschaltung oder dergleichen.

Im Beispiel der Fig. 4 wurde für die äußerste Verteilerdüse 3b gezielt der dritte Betriebszustand 10c gewählt, also der Flüssigkeitsfächer 4 mit dem nach außen reduzierten Öffnungswinkel. Dies begünstigt ein Abdrift minderndes Spritzen im seitlichen Randbereich. Die anderen Verteilerdüsen 3 sind beispielsweise im zweiten Betriebszustand 10b.

Um unterschiedliche ordnungsgemäße Betriebszustände 10a-10c der Verteilerdüsen 3, 3b zu kennzeichnen und insbesondere voneinander zu unterscheiden, arbeiten die zugeordneten Beleuchtungseinheiten 5 vorzugsweise mit entsprechend unterschiedlichen spektralen Abstrahlcharakteristiken 7. In der Fig. 4 hat die Lichtabstrahlung 6 zur Kennzeichnung von Verteilerdüsen 3 im zweiten Betriebszustand 10b einen zweiten Farbton 7b und zur Kennzeichnung der äußeren Verteilerdüse 3b im dritten Betriebszustand 10c einen dritten Farbton 7c.

Vorzugsweise werden die Beleuchtungseinheiten 5 von Verteilerdüsen 3, 3b mit ordnungsgemäßen Betriebszuständen 10a-10c kontinuierlich betrieben, um die ausgestoßenen Flüssigkeitsfächer 4 mit Dauerlicht 8a zu beleuchten. Insbesondere vorübergehend wäre aber auch Blinklicht 8b denkbar. Damit ließen sich beispielsweise Gruppen von Verteilerdüsen 3 kennzeichnen, um Teilbreitenumschaltungen anzukündigen und/oder zu bestätigen. Das Blinklicht 8b könnte dann beispielsweise ein Lauflicht entlang der von der Teilbreitenumschaltung jeweils betroffenen Verteilerdüsen 3 sein oder dergleichen.

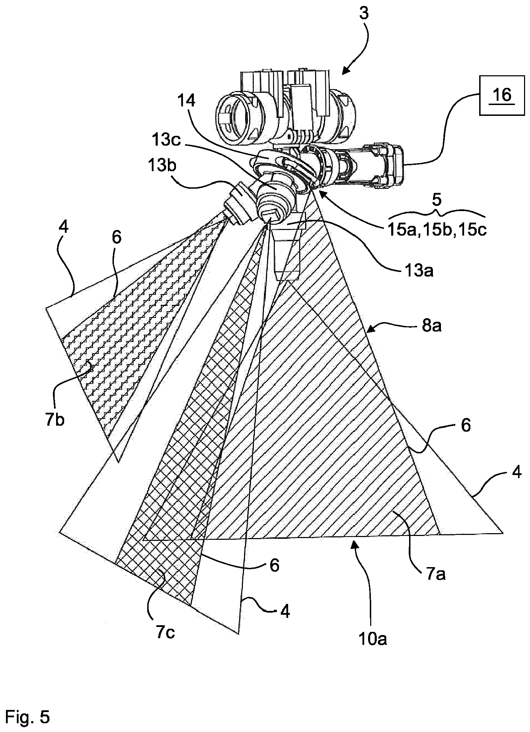

Die Fig. 5 zeigt eine Verteilerdüse 3 mit mehreren, alternativ verwendbaren Düsenkörpern 13a, 13b , 13c zur Erzeugung des Flüssigkeitsfächers 4 entsprechend Betriebszustand 10a, 10b oder 10c. Die Düsenkörper 13a, 13b, 13c sind beispielsweise an einem gemeinsamen Halter 14 gelagert, der beispielsweise als manuell oder motorisch drehbarer Revolver oder dergleichen ausgebildet ist, so dass jeweils nur einer der Düsenkörper 13a, 13b, 13c auf bekannte Weise mit einem Spritzmittel versorgt wird. Die in der Fig. 5 dargestellte Verteilerdüse 3 befindet sich im ersten Betriebszustand 10a mit aktiviertem Düsenkörper 13a. Nur zur Veranschaulichung sind alle Düsenkörper 13a, 13b, 13c mit Flüssigkeitsfächer 4 und Lichtabstrahlung 6 dargestellt.

Die der Verteilerdüse 3 zugeordnete Beleuchtungseinheit 5 umfasst beispielsweise separate Lichtquellen 15a, 15b, 15c, die jeweils den einzelnen Düsenkörpern 13a, 13b, 13c zugeordnet sind. Die separaten Lichtquellen 15a, 15b, 15c werden beispielsweise durch Drehen des Halters 14 gemeinsam mit den zugeordneten Düsenkörpern 13a, 13b, 13c aktiviert.

Die separaten Lichtquellen 15a, 15b, 15c unterscheiden sich vorzugsweise hinsichtlich ihrer spektralen Abstrahlcharakteristik 7 und weisen dann entsprechend unterschiedliche Farbtöne 7a, 7b, 7c auf. Die Lichtquellen 15a, 15b, 15c sind vorzugsweise LED und/oder einfarbig. Einfarbige LED sind besonders energieeffizient und in unterschiedlichen, visuell gut unterscheidbaren Farbtönen 7a, 7b, 7c erhältlich.

Der jeweils im Wesentlichen senkrecht nach unten weisende Düsenkörper 13a wird bekanntermaßen mit Spritzmittel versorgt. Die dem Düsenkörper 13a zugeordnete Lichtquelle 15a kann beispielsweise mit Hilfe eines an dem Halter 14 vorhandenen Positionsgebers oder Stufenschalters (nicht dargestellt) automatisch zugeschaltet werden, sobald der zugeordnete Düsenkörper 13a seine aktive Stellung erreicht hat.

Entsprechend würde die Aktivierung eines anderen Düsenkörpers 13b oder 13c automatisch dazu führen, dass der Flüssigkeitsfächer 4 im Arbeitsbetrieb von der jeweils zugeordneten Lichtquelle 15b oder 15c beleuchtet wird. Die Düsenkörper 13a, 13b, 13c bzw. die Betriebszustände 10a, 10b, 10c sind somit automatisch durch die Beleuchtung des Flüssigkeitsfächers 4 farblich kodiert. Dies soll in der Fig. 5 durch für alle Düsenkörper 13a, 13b, 13c dargestellte Flüssigkeitsfächer 4 und Lichtabstrahlung 6 verdeutlicht werden.

Ein bestimmter Düsenkörper 13a, 13b, 13c kann entweder manuell durch Drehen des Halters 14 oder mittels Stellmotor aktiviert werden. Zugeordnete Lichtquellen 15a, 15b, 15c können zentral von einer (lediglich schematisch angedeuteten) Steuerung 16 oder dezentral, beispielsweise wie oben beschrieben, zu-/umgeschaltet werden.

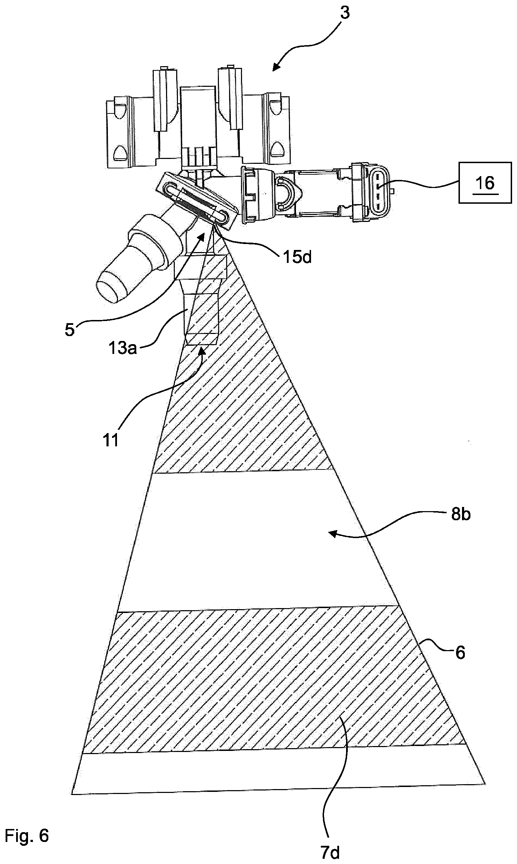

Die Fig. 6 verdeutlicht im Detail den Fehlerzustand 11, bei dem der aktive Düsenkörper 13a der Verteilerdüse 3 keinen Flüssigkeitsfächer 4 ausstößt. In diesem Fall wechselt die zeitliche Abstrahlcharakteristik 8 der zugeordneten Beleuchtungseinheit 5 von dem in der Fig. 5 gezeigten Dauerlicht 8a in ein Blinklicht 8b mit geeignetem Blinkmuster. Dies ermöglicht eine zuverlässige optische Fehlermeldung auch bei Dunkelheit.

Stattdessen oder ergänzend kann der Fehlerzustand 11 auch durch eine Änderung der spektralen Abstrahlcharakteristik 7 der zugeordneten Beleuchtungseinheit 5 von dem in der Fig. 5 gezeigten ersten Farbton 7a im ordnungsgemäßen Betriebszustand 10a zu einem vierten Farbton 7d im Fehlerzustand 11 angezeigt werden.

Die Beleuchtungseinheit 5 kann zur Anzeige unterschiedlicher Betriebs- und/oder Fehlerzuständen 10a, 10b, 10c, 11 wenigstens eine farblich durchstimmbare Lichtquelle 15d, insbesondere eine mehrfarbige LED, umfassen. Diese kann gemeinsam für alle Düsenkörper 13a, 13b, 13c verwendet werden und ist an der Verteilerdüse 3 oder am Verteilergestänge 2 befestigt.

Beispielsweise könnten für ordnungsgemäße Betriebszustände 10a, 10b, 10c blaue, grüne und gelbe Farbtöne 7a, 7b, 7c verwendet werden und für wenigstens einen Fehlerzustand 11 ein roter Farbton 7d.

Besonders vorteilhaft wäre beispielsweise ein Anzeigen des Fehlerzustands 11 durch ein rotes Blinklicht 8b. Der Wechsel vom Dauerlicht 8a zu einem Blinklink 8b mit charakteristischem Blinkmuster bietet den Vorteil, dass auch farbenblinde Personen den Fehlerzustand 11 gut erkennen können.

Für die Erkennung von Fehlerzuständen 11 kann im Bereich jeder Verteilerdüse 3 eine Überwachungseinheit (nicht dargestellt) vorhanden sein, die beispielsweise einen Teil der am Flüssigkeitsfächer 4 abgelenkten Lichtabstrahlung 6 detektiert. Fällt die Intensität des derart detektierten Lichts beispielsweise unter einen vorgegebenen Schwellenwert, so kann von einem Fehlerzustand 11 an der Verteilerdüse 3 ausgegangen werden. Die spektrale, zeitliche und/oder direktionale Abstrahlcharakteristik 7, 8 ,9 der zugeordneten Beleuchtungseinheit 5 wird dann zur Anzeige des Fehlerzustands 11 beispielsweise von der Steuerung 16 gezielt umgeschaltet.

Die Beleuchtungseinheiten 5 könnten zu diesem Zweck auch zusätzliche Lichtquellen (nicht dargestellt) umfassen, die einen Fehlerzustand 11 durch eine Änderung, gegebenenfalls auch Ergänzung, der direktionalen Abstrahlcharakteristik 9a anzeigen. Beispielsweise könnten zusätzlich oder ersatzweise Licht nach oben hin abgestrahlt werden, um den Fehlerzustand 11 anzuzeigen oder deutlicher zu visualisieren. Nichtsdestoweniger sind die Beleuchtungseinheiten 5 in jedem Fall zur Beleuchtung der Flüssigkeitsfächer 4 wenigstens in ordnungsgemäßen Betriebszuständen 10a, 10b, 10c ausgebildet.

Die Beleuchtungseinheiten 5 sind jeweils separaten Verteilerdüsen 3 zugeordnet und so ausgebildet, dass mittels gezielter Änderung wenigstens einer Abstrahlcharakteristik 7, 8, 9 unterschiedliche Betriebszustände 10a, 10b, 10c und/oder Fehlerzustände 11 für die jeweils zugeordnete Verteilerdüse 3 separat angezeigt werden können.

Denkbar ist auch, dass mehrere Beleuchtungseinheiten 5 gruppenweise von der Steuerung 16 angesteuert werden, um bestimmte Betriebszustände für Gruppen zugeordneter Verteilerdüsen 3 anzuzeigen, beispielsweise bei einer Zuschaltung oder Abschaltung von Verteilerdüsen 3 im Rahmen einer Teilbreitenschaltung der Feldspritze 1 oder dergleichen. Beispielsweise können mehrere Beleuchtungseinheiten 5 zur Erzeugung von Blinklichtern, Lauflichtern oder dergleichen synchronisiert werden. Dies kann vorübergehend erfolgen, um dem Fahrer der Feldspritze auf eine auszuführende oder ausgeführte Änderung des Arbeitsbetriebs hinzuweisen.

Den Verteilerdüsen 3 und/oder Beleuchtungseinheiten 5 zugeordnete Steuereinheiten 16 können sowohl zentral an der Feldspritze 1 vorhanden sein als auch dezentral im Bereich der Verteilerdüsen 3. Die elektrische Energieversorgung der Beleuchtungseinheiten 5 und/oder deren Ansteuerung mittels CAN-Bus oder dergleichen sind auf herkömmliche Weise möglich und daher nicht weiter erläutert. Für abschließende Feierlichkeiten können die Beleuchtungseinheiten 5 auch von einer Musikquelle angesteuert werden und als Lichtorgel oder dergleichen arbeiten.

## Patentansprüche

1. Feldspritze (1) mit an einem Verteilergestänge (2) in Abständen zueinander angeordneten Verteilerdüsen (3), denen Beleuchtungseinheiten (5) zur Beleuchtung eines von den Verteilerdüsen jeweils ausgestoßenen Flüssigkeitsfächers (4) zugeordnet sind, **dadurch gekennzeichnet, dass** die Beleuchtungseinheiten eine hinsichtlich spektraler, zeitlicher und/oder direktionaler Abstrahlcharakteristik (7, 8, 9) in Abhängigkeit von Betriebs- und/oder Fehlerzuständen (10a-10c, 11) der Verteilerdüsen umschaltbare Lichtabstrahlung (6) aufweisen.

2. Feldspritze nach Anspruch 1, wobei die Beleuchtungseinheiten (5) zwischen wenigstens zwei unterschiedlichen Farbtönen (7a-7d) umgeschaltet werden können.

3. Feldspritze nach Anspruch 1 oder 2, wobei die Beleuchtungseinheiten (5) zwischen Dauerlicht (8a) und Blinklicht (8b) umgeschaltet werden können.

4. Feldspritze nach einem der vorigen Ansprüche, wobei eine Hauptabstrahlrichtung (8a, 8b) der Beleuchtungseinheiten (5) umgeschaltet werden kann.

5. Feldspritze nach einem der vorigen Ansprüche, ferner mit einer Steuerung (16) für die Beleuchtungseinheiten (5) zum synchronisierten Abstrahlen eines Blinklichts oder Lauflichts für eine Gruppe von Verteilerdüsen (3).

6. Feldspritze nach einem der vorigen Ansprüche, wobei die Beleuchtungseinheiten (5) jeweils wenigstens zwei getrennt zuschaltbare einfarbige LED umfassen und/oder wenigstens eine mehrfarbige LED mit einstellbarer Farbmischung.

7. Feldspritze nach einem der vorigen Ansprüche, ferner mit Überwachungseinheiten zum Überwachen der Flüssigkeitsfächer (4), insbesondere zur optischen Überwachung der beleuchteten Flüssigkeitsfächer, hinsichtlich des Auftretens wenigstens eines Fehlerzustands (11).

8. Feldspritze nach einem der vorigen Ansprüche, ferner mit wenigstens einer Steuerung (16) zum Umschalten der Abstrahlcharakteristik (7, 8, 9) selektiv für Verteilerdüsen (3) im Fehlerzustand (11).

9. Feldspritze nach einem der vorigen Ansprüche, wobei die Verteilerdüsen (3) jeweils wenigstens zwei alternativ aktivierbare Düsenkörper (13a-13c) zum Ausstoßen unterschiedlieher Flüssigkeitsfächer (4) umfassen und jedem Düsenkörper ein eigener Farbton (7a-7c) zur Beleuchtung des erzeugten Flüssigkeitsfächers zugeordnet ist.

10. Feldspritze nach Anspruch 9, wobei die Beleuchtungseinheiten (5) jeweils unterschiedlichen Düsenkörpern (13a-13c) der Verteilerdüse (3) zugeordnete und einzeln zuschaltbare Lichtquellen (15a-15c), insbesondere einfarbige LED, umfassen.

11. Feldspritze nach Anspruch 9, wobei die Beleuchtungseinheiten (5) mehreren Düsenkörpern (13a-13c) gemeinsam zugeordnete und zur Farbmischung einstellbare Lichtquellen (15d), die insbesondere mehrfarbige LED sind, umfassen.

12. Feldspritze nach einem der Ansprüche 9 bis 11, wobei die Düsenkörper (13a-13c) an verstellbaren Haltern (14), insbesondere Revolvern, mit Positionsgebern zum Feststellen des jeweils aktivierten Düsenkörpers (13a-13c) und/oder mit Stufenschaltern zum Umschalten des Farbtons (7a-7c) gelagert sind.

13. Feldspritze nach einem der Ansprüche 9 bis 11, ferner mit Stellmotoren zur Aktivierung der Düsenkörper (13a-13c) und mit einer Steuerung (16) zum automatischen Zuschalten des dem aktivierten Düsenkörper zugeordneten Farbtons (7a-7c).
